(19) Europäisches Patentamt
European Patent Office
Office européen des brevets

(11) **EP 1 772 065 B1**

(12) **EUROPEAN PATENT SPECIFICATION**

(45) Date of publication and mention
of the grant of the patent:
**28.11.2012 Bulletin 2012/48**

(51) Int Cl.:
*A23L 1/223* (2006.01)     *A23B 7/02* (2006.01)
*A23L 1/212* (2006.01)     *A23L 1/221* (2006.01)

(21) Application number: **05751419.2**

(22) Date of filing: **13.06.2005**

(86) International application number:
**PCT/JP2005/011196**

(87) International publication number:
**WO 2005/122787 (29.12.2005 Gazette 2005/52)**

(54) **DRIED CAPSICUM CONTAINING CAPSINOID AND METHOD OF DRYING THEREFOR**

CAPSINOIDHALTIGE GETROCKNETE PAPRIKASCHOTEN UND VERFAHREN ZU IHRER TROCKNUNG

PIMENT SÉCHÉ CONTENANT UN CAPSINOÏDE ET PROCÉDÉ POUR LE SÉCHAGE DE CELUI-CI

(84) Designated Contracting States:
**AT BE BG CH CY CZ DE DK EE ES FI FR GB GR HU IE IS IT LI LT LU MC NL PL PT RO SE SI SK TR**

(30) Priority: **15.06.2004 JP 2004176936**

(43) Date of publication of application:
**11.04.2007 Bulletin 2007/15**

(73) Proprietor: **Ajinomoto Co., Inc.**
**Tokyo 104-8315 (JP)**

(72) Inventors:
• **MORI, Hideki**
c/o AJINOMOTO CO., INC.
**Kawasaki-shi, Kanagawa 2108681 (JP)**
• **HIRANO, Tomoko**
c/o AJINOMOTO CO., INC.
**Kawasaki-shi, Kanagawa 2108681 (JP)**
• **KUHARA, Hiroshi**
c/o AJINOMOTO CO., INC.
**Kawasaki-shi, Kanagawa 2108681 (JP)**
• **OKADA, Akira**
c/o AJINOMOTO CO., INC.
**Kawasaki-shi, Kanagawa 2108681 (JP)**
• **YAMAHARA, Satoshi**
c/o AJINOMOTO CO., INC.
**Kawasaki-shi, Kanagawa 2108681 (JP)**

(74) Representative: **Strehl, Peter**
**Patentanwälte**
**Strehl Schübel-Hopf & Partner**
**Maximilianstrasse 54**
**80538 München (DE)**

(56) References cited:
**JP-A- 6 007 078        JP-A- 11 246 478**
**JP-A- 57 008 755       JP-A- 2002 142 712**
**US-A1- 2002 086 099**

• **SANJUAN N., LOZANO M., GARCIA-PASCUAL P., MULET A.: "Dehydration kinetics of red pepper (Capsicum annuum L var Jaranda)." JOURNAL OF THE SCIENCE OF FOOD AND AGRICULTURE, vol. 83, no. 7, 2003, pages 697-701, XP002469940 CORRESPONDENCE (REPRINT) ADDRESS, A. MULET, DEP. OF FOOD TECH., UNIV. POLITEC. DE VALENCIA, E-46071 VALENCIA, SPAIN. E-MAIL AMULET(A)TAL.UPV.ES**
• **DOYMAZ I., PALA M.: "Hot-air drying characteristics of red pepper." JOURNAL OF FOOD ENGINEERING, vol. 55, no. 4, 2002, pages 331-335, XP002469939 CHEM. ENG. DEP., YILDIZ TECH. UNIV., 34210 ESENLER, ISTANBUL, TURKEY. TEL. +90 212 449 17 18. FAX +90 212 449 18 95. E-MAIL DOYMAZ(A)YILDIZ.EDU.TR**

## Description

TECHNICAL FIELD

The present invention relates to a capsinoid-containing dried chili pepper product that is manufactured by maintaining the product at a relatively low temperature and/or conducting rapid drying, and to a method for drying the same.

BACKGROUND ART

As a chili pepper with little pungency, the non-pungent species "CH-19 Sweet" that has been selectively fixed by Yazawa et al. contains almost none of the pungent, invasive capsaicinoid compounds (capsaicin, dihydrocapsaicin, and the like) of common chili peppers. However, it is reported to contain large quantities of novel, non-pungent capsinoid compounds (fatty acid esters of vanillyl alcohol, capsiates, dihydrocapsiates, and the like) (Patent Reference 1). Further, these capsinoid compounds have been identified in other plants of the genus *Capsicum* (Nonpatent Reference 1).

Although capsinoid compounds differ from capsaicinoid compounds by being non-pungent, they are reported to have energy-metabolizing effects, body fat accumulation-inhibiting effects, immunostimulating activity and the like (Patent Reference 1). Future applications are thus anticipated.

Since the molecular structure of the capsinoid compounds contains ester bonds, they are unstable in the presence of water. They are also characterized by decomposing extremely readily in the presence of heat. Accordingly, the efficient extraction of capsinoid compounds from chili peppers presents the practical problem of how to prevent decomposition of the capsinoid compounds in the various steps through extraction.

Patent Reference 1 describes a method of drying capsinoid-containing plants characterized in that a freeze-drying method is employed before a capsinoid extraction step. However, the freeze-drying method is inadequately efficient at the level of large-quantity industrial production. Patent Reference 2 discloses a method for manufacturing dried chili peppers and a device for the same. However, this patent relates to a method for drying common hot chili peppers; there is no particular problem with the stability of capsaicins, which are the main components of hot chili peppers. Generally, there are numerous known methods with regard to dryers and mechanisms suitable for use on foods as a whole (Patent Reference 3, Nonpatent References 2 to 4). However, no drying method of any type has yet been disclosed that takes into account the stability of the above-described capsinoid compounds.

[Patent Reference 1] Japanese Patent Application Publication No. Heisei 11-246478
[Patent Reference 2] Japanese Patent Application Publication No. 2001-69938
[Patent Reference 3] Japanese Patent Application Publication No. 2000-41613
[Nonpatent Reference 1] Journal of the Japanese Society for Horticultural Science 58, p. 601-607.
[Nonpatent Reference 2] Methods of Scaling-Up Powder Plants, Osamu SAKASHITA, p. 153.
[Nonpatent Reference 3] Handbook of Powder Technology, comp. by Tsunemi MORI, p. 206.
[Nonpatent Reference 4] Powder Engineering Handbook, 2nd ed., comp. by the Japan Society of Powder Technology, p. 358.
[Nonpatent Reference 5] Dehydration kinetics of red pepper (capsicum annuum L var Jaranda, by N Sanjuán et al., 2003, Journal of the Science of ood and
Agriculture, p.697-701. [Nonpatent Reference 6] Hot-air drying characteristics of red pepper, by Ibrahim Doymaz et al., 2002, Journal of Food Engineering, p.331-335.

DISCLOSURE OF THE INVENTION

The object of the present invention is to permit the stable and industrial extraction of capsinoids and their use as powder formula in foods, and more particularly, to discover suitable drying conditions that prevent the decomposition of capsinoid compounds and increase the yield in the step of drying capsinoid-containing chili peppers prior to the extraction of capsinoid compounds. Specifically, the object of the present invention is to provide a method for conveniently drying capsinoids while maintaining stability under prescribed conditions, and to provide a capsinoid-containing dried chili pepper product.

As the result of research conducted to solve the above-stated problem, the present inventors discovered that cutting capsinoid-containing chili peppers - either in advance or during drying - and then subjecting them to a (continued) drying step increased the surface area and ruptured the outer skin of the chili peppers, thereby accelerating the evaporation of internal moisture, enhancing drying efficiency, and permitting rapid drying. They also discovered that a combination of frequent and uniform mixing and stirring caused moisture to evaporate evenly from the chili pepper mass, preventing uneven heating. Still further, they discovered that during hot air drying, maintaining the speed of the hot air passing through the capsinoid-containing chili pepper mass at about 0.3 m/s or more when averaged in batches, or about 0.2 m/s or more when continuously averaged, yielded excellent results. As a result, it was discovered that excessive heating of capsinoid components was prevented and thus the decomposition of capsinoid compounds was suitably prevented during the drying step. The present invention was devised on this basis. Further, as a result of various research focused on drying conditions and stirring conditions in the drying step, the present inventors discovered conditions that better prevented the decomposition of capsinoid compounds. The present invention was also devised on this basis.

That is, the present invention relates to methods for drying capsinoid-containing chili peppers and to capsinoid-containing dried chili pepper products. The present invention contains the following:

(1) A method for drying a material to be dried in the form of capsinoid-containing chili peppers by means of a box-type batch dryer, characterized by comprising the following steps and in that the capsinoid survival rate following drying is 70 percent or greater:

1) charging the material to be dried into the dryer so that the material comes into uniform contact with hot air; and
2) setting an airflow so that an average speed of hot air immediately after passing through the material to be dried is 0.3 m/s or more, with a speed of hot air not being so great as to scatter the material to be dried; and conducting drying until a moisture content as measured by AOAC method is 10 percent or less.

(2) A method for drying material to be dried in the form of capsinoid-containing chili peppers in a continuous dryer, characterized by comprising the following steps and in that the survival rate of capsinoids following drying is 70 percent or greater:

1) charging the material to be dried into the dryer so that the material to be dried comes into uniform contact with hot air; and
2) setting an airflow so that an average speed of hot air immediately after passing through the material to be dried is 0.2 m/s or more, with a speed of hot air not being so great as to scatter the material to be dried; and drying until a moisture content as measured by AOAC method is 10 percent or less.

(3) The method according to (1) or (2) wherein said drying method satisfies at least one of the following conditions:

1) a hot air temperature of: 65 to 80°C;
2) stirring conducted at least once per hour.

(4) The method according to any one of (1) to (3) wherein said material to be dried has been sliced to a width of 0.5 to 10 mm.
(5) The drying method according to any one of (1) to (4) wherein said capsinoid-containing chili peppers are one or more chili peppers selected from the group consisting of Manganji peppers, Shishito peppers, Fushimi Amanaga peppers, and CH-19 Sweet peppers.
(6) A method for drying capsinoid-coritaining chili peppers for use in the extraction of capsinoids, characterized in that heat drying is conducted so that, at a minimum, the weight of the capsinoid-containing chili peppers is reduced to not more than 20 percent, and the moisture content to not more than 10 percent, that of the raw fruit.
(7) The drying method according to (6) wherein said drying method is conducted with a dryer having a heat transfer system operating based on a method selected from the group consisting of convective heat transfer, conductive heating, and radiative heat transfer, or a combination of such methods, and wherein the dryer operates continuously or in batches.
(8) The drying method according to (7) wherein said dryer is classified as a band-type, fluidized bed-type, draft-type, rotating-type, spraying-type, stirring-type, box-type, moving bed-type, or drum-type dryer based on the mechanical configuration thereof.
(9) The drying method according to any one of (6) to (8) wherein said drying method is implemented with a convective heat-transfer type dryer and either continuous or discontinuous stirring is conducted at least once an hour.
(10) The drying method according to any one of (6) to (9) wherein said drying method is implemented with a box-type dryer based on a convective heat transfer system at a drying temperature of from 40 to 120°C.
(11) The drying method according to any one of (6) to (8) wherein said drying method is implemented with a drum dryer based on a conductive heating system with a drum surface temperature in said dryer of 40 to 120°C.
(12) The drying method according to any of (6) to (8) or (11) wherein said drying method is implemented with a reduced pressure or vacuum drum dryer based on a conductive heating system with a drum surface temperature in said dryer of 40 to 100°C.
(13) The drying method according to any of (6) to (10) wherein said drying method is uniformly implemented so that the temperature of the capsinoid-containing chili peppers and an air discharge temperature of the dryer are maintained at 120°C or below.

(14) The drying method according to any of (6) to (13) wherein said capsinoid-containing chili peppers are cut to promote moisture evaporation and enhance capsinoid stability.

(16) A capsinoid-containing dried chili pepper product dried by the method according to any one of (6) to (15) in which a capsinoid content of not less than 30 percent the level preceding drying is maintained.

(17) A capsinoid-containing dried chili pepper product dried by the method according to any one of (6) to (15) in which a capsinoid content of not less than 0.01 mg per gram of dried product is maintained.

## EFFECT OF THE INVENTION

The present invention permits the obtaining of a capsinoid-containing dried chili pepper product suited to industrial extraction without loss of the capsinoid components of the capsinoid-containing chili peppers, imparting great industrial utility.

## BRIEF DESCRIPTION OF THE DRAWINGS

Fig. 1: An example of a box-type batch dryer.
Fig. 2: An example of a rotating-type dryer.

## BEST MODE OF IMPLEMENTING THE INVENTION

In the present invention, the term "capsinoid" means a fatty acid ester of vanillyl alcohol contained as a component of a non-pungent chili pepper. Typically, the capsinoids include capsiates, dihydrocapsiates, and nordihydrocapsiates. Accordingly, in the present invention, the term "capsinoid-containing chili pepper" includes both the body and fruit of plants of the genus *Capsicum* containing capsinoid components (referred to as "chili peppers" hereinafter).

The capsinoid-containing chili peppers employed may be derived from local pungent chili pepper species typified by "Nikko," "Goshiki," and the like, or may be any other type of chili pepper that contains capsinoids. Of these, local non-pungent species of chili peppers typified by "CH-19 Sweet," "Manganji," "Fushimi Amanaga," "Shishito," and green peppers containing quantity of capsinoids and may be suitably employed. The non-pungent species "CH-19 Sweet" contains a large quantity of such components and is thus employed with particular preference. Here, the term "CH-19 Sweet" is to be construed as including both "CH-19 Sweet" and later generation analog species of "CH-19 Sweet". In the present Specification, the term "CH-19 Sweet" refers to such species collectively.

Methods of drying capsinoid-containing chili peppers are described below.

### 1. Drying system

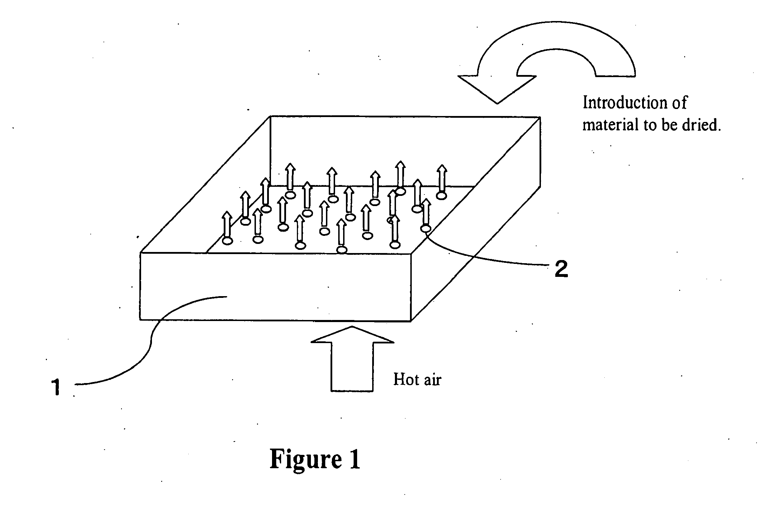

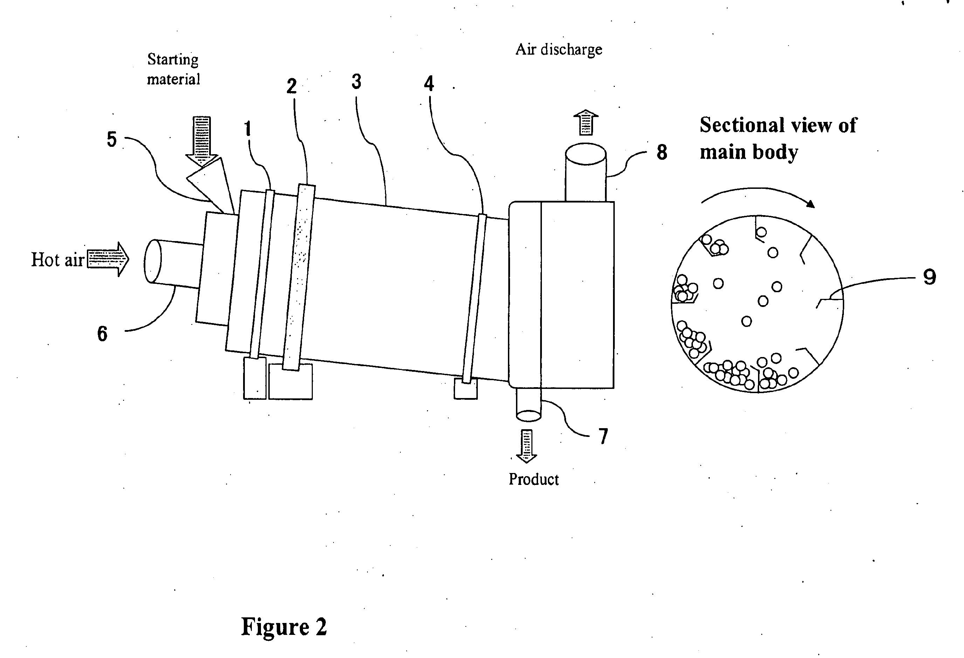

Industrial devices for drying solid and powder products include box-type, tunnel-type, band-type, hard-type, rotating-type fluid, ventilated rotating, draft, cylinder stirring, vacuum rotating, far infrared, microwave, inductive heating, and hot steam drying methods. The use of spraying-type and drum dryers is known in drying systems for liquids, mud, silt, colloids, oils, mixed solutions of finely comminuted products, and the like. Additionally, supercritical drying systems and the like have been developed (Nonpatent Reference 4). These dryers may be roughly divided by heat transfer method into convective heat transfer, conductive heating, and radiative heat transfer systems. Convective heat transfer systems, also known as draft heating systems, are hot drying methods in which hot air is passed directly over the surface or through a layer of the material being dried and heat is transferred by convection. There are many examples of such systems among the above-mentioned box-type, tunnel-type, band-type, and rotating-type dryers. Conductive heating systems are drying methods in which a material being dried is supported on, or passed through, the surface of a heating medium and heated by thermal conduction. There are many examples of such systems among the above-mentioned drum-shaped and spraying-type dryers. Radiative heat transfer systems are dryers employing a source of heat in the form of infrared radiation, high-frequency waves, or microwaves. Any of the above may be employed in the drying of the capsinoid-containing chili peppers of the present invention (referred to hereinafter simply as "chili pepper mass") so long as the dryer confirms to the drying conditions described further below. From the perspective of universality, convective heat-transfer system box-type, tunnel-type, band-type, rotating-type fluid, and cylindrical stirring systems, as well as drum-type convective heating systems, are preferred. From the perspective of the stirring conditions described further below, band-type, rotating-type fluid, and cylindrical stirring systems are preferred. Fig. 1 shows a typical example of a box-type batch device, and Fig. 2 shows a typical example of a rotating-type fluid device. The present invention is not limited thereto.

Further, when the chili pepper mass is cut for drying, devices known for use in drying products varying from solids to powders can be employed as the drying system. Alternatively, the chili pepper mass can be subjected to a suitable pretreatment such as extremely fine cutting (mincing) or dispersion in a solvent (referred to hereinafter as a "chili pepper mass solution") and a device (such as a drum dryer) known for drying liquids, mud, silt, colloids, oils, or mixed solutions of finely comminuted product may be employed. Further, drying can be conducted with the interior of the device under vacuum or reduced pressure, the air employed in drying can be dehumidified for use, or drying can be conducted in a chamber in a dehumidified environment to conduct drying at lower temperature. In this case, a vacuum drum-type dryer is particularly desirable among the drum dryers. Here, the term "vacuum drum dryer" refers to a drum-type dryer with a vacuum chamber that is capable of drying mixed chili pepper solutions at reduced pressure (including under vacuum) and at low temperature. Vacuum drum dryers may be devices that dry a chili pepper mass on a drum having a chamber the pressure of which can be reduced. Known methods as well as vacuum drum dryers developed in the future may be employed (for example, Japanese Patent Application Publication Nos. Heisei 7-8702 and Heisei 7-51502).

2. Drying conditions

1) Drying conditions and capsinoid survival rate

The present inventors conducted extensive research, resulting in the discovery that the capsinoid survival rate was related to the drying conditions as follows. They discovered that when the chili pepper mass was cut, either ahead of time or during drying, and then supplied to a (continued) drying step, the surface area increased and the outer skin of the chili peppers ruptured, accelerating moisture evaporation, enhancing drying efficiency, and permitting rapid drying. Further, increasing the speed of the air in portions in contact with the chili pepper mass enhanced moisture evaporation and prevented uneven heating, thereby further contributing to rapid drying and greatly increasing the capsinoid survival rate. Further, combining frequent and uniform mixing and stirring reduced uneven heating of the chili pepper mass. As a result, water evaporated uniformly from the chili pepper mass. In this process, the heat of vaporization prevented a rise in the product temperature. Subsequently, overheating of capsinoid components was prevented, and decomposition of capsinoid compounds in the drying step was suitably prevented.

2) Temperature conditions

(1) Temperature conditions when employing a convective heat transfer dryer

Accordingly, to increase the capsinoid survival rate follow drying of capsinoid-containing chili peppers when employing a convective heat transfer dryer, the temperature of the hot air blown in during drying is desirably set to 30 to 120°C, preferably 40 to 120°C, still more preferably 50 to 100°C, still more preferably 50 to 80°C, and still more preferably 70 to 75°C. When this is done, the discharge air temperature of the dryer is desirably maintained at 120°C or less under uniform temperature conditions. When a dryer equipped with a rotating-type flow mechanism or cylindrical stirring mechanism is employed and the starting material is vigorously or frequently stirred, uneven heating is prevented by the stirring and a rise in the temperature of the product is effectively precluded, permitting the use of a higher temperature. Additionally, under conditions where dehumidified hot air is supplied - for example, when a blowing mechanism equipped with a dehumidifying device or a dryer equipped with a dehumidifying device is employed - drying at still lower temperature is possible. When determining the drying time, a suitable preliminary investigation can be conducted and the time required to achieve the moisture level described further below can be set in relation to the quantity of hot pepper loaded and the capacity of the machine in addition to the above hot air temperature. That is, drying until the moisture content reaches 10 percent or less, preferably 5 percent or less, enhances the extraction efficiency of the organic solvent extraction or oil extraction step following drying and prevents rotting during storage. In addition it reduces the free water in the chili pepper mass, thereby increasing the stability of the capsinoids. Accordingly, drying until the moisture content reaches 10 percent or less, preferably 5 percent or less, is important for increasing capsinoid stability. The moisture content is desirably measured by the AOAC method, a standard international method. However, for the sake of process management, other convenient methods may also be employed. When drying is conducted until the moisture content reaches 10 percent or less, the weight of the chili pepper mass decreases to about 20 percent the pre-drying level.

(2) Temperature conditions when employing a drum dryer

To increase the survival rate of capsinoids following drying of the capsinoid-containing chili peppers, the temperature of the surface of the drum during drying with a drum dryer is desirably 30 to 120°C, preferably 30 to 100°C, and more preferably 30 to 90°C. Further, when employing a vacuum drum dryer equipped with vacuum chamber, the pressure in the vacuum chamber is desirably no higher than 100 Torr, preferably no higher than 50 Torr, more preferably no higher than 30 Torr, and still more preferably no higher than 10 Torr. Such conditions can be suitably set based on the machine. For example, conditions permitting drying that maintains the flavor of seasonings can be employed (for example, see Patent Reference 3).

Further, as stated above, rendering the internal temperature of the capsinoid-containing chili peppers uniform during drying increases the capsinoid survival rate following drying. Thus, uneven heating during drying is desirably actively prevented. To prevent uneven heating, it is important to prevent overheating following the completion of evaporation of moisture in the capsinoid-containing chili peppers. From this perspective, it is desirable to suitably alter the heating temperature and period. For example, to conduct two-stage drying, in which lowering the drying temperature or ventilation air applied so that altering the temperature be lower from several minutes to several hours before the moisture content of the capsinoid-containing chili peppers reaches 10 percent or less, regular sampling can be conducted and the moisture content of the product being dried can be suitably measured, or a temperature sensor can be employed in the dryer. This effectively prevents overheating, increasing the capsinoid survival rate. Further, when conducting low temperature drying from the outset, the temperature remains low even when heating is uneven, having little effect on the capsinoid survival rate. From this perspective, the above-described vacuum drum dryer or dryer equipped with dehumidifying device is desirably employed.

3) Preprocessing of the product being dried

In another method of preventing uneven heating, the capsinoid-containing chili peppers can be suitably cut prior to the drying step. The cutting size is suitably determined for each dryer employed. That is, a size that prevents loss of the product due to the product falling into the dryer and optimizes stirring efficiency can be employed. When cutting to a size smaller than the outlets of the hot air nozzles, it is possible to employ a cloth or the like of suitable mesh size to prevent leaks from the drum. As an example, when employing a box-type batch dryer, the cutting size is desirably 0.1 mm to 10 cm, preferably 0.7 mm to 5 cm. A slicer, mincer, power mill, or the like can be suitably employed for cutting. When processing on an industrial scale, a slicer is desirable from the perspective of efficiency. When cutting frozen starting materials, it is desirable to employ a device with good dynamic cutting strength and a cutting blade that will not drop out.

4) Stirring conditions

To prevent the above-described uneven heating, it is important to set stirring conditions. In the example of a box-type batch dryer, when charged with 100 kg of a frozen, comminuted starting material and employing a hot air inlet temperature of 70°C, stirring once each 30 minutes as opposed to once each hour reduced the drying time from 3.5 hours to 2.5 hours and increased the capsinoid survival rate from 41 percent to 58 percent. Accordingly, frequent stirring is desirable during drying. Specifically, when employing a box-type batch dryer, stirring once each 30 minutes is desirable, once each 15 minutes is preferred, and continuous stirring is of even greater preference. Further, it is possible to mount a suitable stirring device to conduct continuous stirring, even on a batch-type device. When conducting drying with the above-described rotating-type dryer, intermittent stirring is highly desirable. With a band-type dryer, when the belt mechanism rotates, the product being dried is sometimes transferred to the next belt mechanism and stirred. In that case, the degree of uneven heating varies with the quantity of product being dried that piles up on the belt mechanism, sometimes causing the above conditions to vary. As an example, the rotation frequency, that is, stirring frequency, of the belt mechanism of a band-type dryer varies with the permissible rpm of the machine, but is about once every 30 minutes.

5) Air flow

Based on the structural formula of capsinoids, it is easy to imagine them hydrolyzing into vanillyl alcohols and fatty acids upon contact with water. It is anticipated that rapidly and efficiently moving the moisture out of a product being dried with hot air can prevent such hydrolysis and greatly improve the survival rate. The transporting of moisture by hot air is affected by the moisture level (saturated water vapor level) that can be carried by the hot air. When the drying temperature is raised, the quantity of water vapor that can be carried by the hot air increases and drying progresses. However, when stirring is infrequent, uneven heating results, overheated portions develop, and the hydrolysis of capsinoids is thought to partially progress. When the drying temperature is low, the amount of water vapor that can be carried by the hot air is lower than when the temperature is high, so drying efficiency decreases. However, the air speed can be increased to frequently bring in hot air that has not reached the water vapor saturation level. This can be expected to increase drying efficiency at low temperature.

Normally, in a batch-type dryer, the speed of the air immediately after passing through the product being dried is also affected by complicating charging of the product being dried, and the value varies with the site of measurement, but is 0 to 0.7 m/s. When the average of measurements taken at several spots is calculated, it is less than 0.2 m/s (to determine the air speed, measurements were taken at several points on the drying surface, and the average value was rounded off to the nearest significant digit). When this device was employed to increase the air speed and increase the speed of the hot air immediately after passing through the product being dried, the average air speed reached or exceed 0.2 m/s. Heating by hot air efficiently moved water vapor evaporating from the product being dried into the hot air. As a result, the heating time was shortened, and the survival rate increased (4 and 6 in Table 1). In this process, when the mixing and stirring frequency was increased, the survival rate climbed even higher (segments 2, 5, and 6 in Table 1). Further, drying efficiency also increased when the thickness of the starting material charge layer was reduced at the same air speed. As a result, the survival rate also increased (segments 4 and 7 in Table 1). At that time, production efficiency decreased, but production efficiency could be supplemented by employing a dryer conducting continuous charging and drying.

3. Other steps

The capsinoid content of the dried product of the present invention obtained by the drying method set forth above can be measured under the analysis conditions described below. Further, the dried product of the present invention contains capsinoids and can be suitably employed to extract capsinoids. To suitably prevent the decomposition of capsinoids after drying so as to increase extraction efficiency, it is desirable to store the dried product in a refrigerator, preferably a freezer. Likewise, the storage of intermediate dried products during drying in a refrigerator or freezer is desirable. Similarly, employing raw fruit in the form of capsinoid-containing chili peppers that have been stored in a refrigerator or freezer prior to drying increases the capsinoid content following drying. In capsinoid extraction, an extraction method such as organic solvent extraction employing hexane, alcohol, liquefied carbon dioxide gas, ethyl acetate, acetone, or the like and oil extraction methods employing primarily edible oils may be suitably employed. In this process, it is also desirable from the perspective of extraction efficiency for the dried product of the present invention to have a moisture content of 10 percent or less.

4. Capsinoid analysis methods

    1) A suitable quantity of chili peppers, a dried product thereof, or an intermediate product in the drying process is weighed out and refrigerated.
    2) The refrigerated chili peppers, dried product thereof, or intermediate product in the drying process is freeze-dried.
    3) When completely dry, the freeze-dried product is comminuted to a degree where it is difficult to distinguish the seeds.
    4) After adding an organic solvent to the comminuted product and thoroughly stirring and mixing, centrifugation is conducted and the supernatant is employed as a sample extraction solution.
    5) As needed, the sample extraction solution can be purified with Bond Eluate C18 to obtain a bond eluate filtrate.
    6) The sample extraction solution and bond eluate filtrate are suitably diluted and quantified by high-performance liquid chromatography (HPLC).
    7) Synthesized capsinoid can be employed as standard product.

Capsinoid survival rate

The capsinoid content of a sample for which the survival rate was being calculated was measured and the ratio relative to the capsinoid analysis value of the control (same lot, "CH-19 Sweet" frozen product) was calculated as the capsinoid survival rate.

$$\text{Capsinoid survival rate (\%)} = \text{capsinoid content per gram of sample dried product} \div$$
$$\text{capsinoid content per gram of control dried product} \times 100$$

HPLC content analysis was conducted according to a method described in the literature (J. Agric. Food Chem. 2001, 49, 4026-4030).

| Column: | J's sphere ODS-H80 (150 mm x 4.6 mm i.d.) |
| Mobile phase: | 80 percent methanol |
| Flow rate: | 0.5 mL/min |
| Fluorescence detection: | 280 nm, em 320 nm |

(5) Moisture detection method

1) Moisture detection during drying

A Ketto moisture meter (infrared moisture measurement device) was employed. A roughly 5 g sample of CH-19 Sweet for moisture detection was cut to suitable size and charged to a measurement container. The height of the light source was fixed at 7 cm and measurement was conducted until the measured moisture value stabilized. The measurement time was 20 to 25 minutes for the initial drying period sample and about 5 minutes for the final drying period sample.

2) Moisture measurement in dried product (the AOAC method)

A roughly 10 g sample of CH-19 Sweet for measurement was mixed until uniform. Roughly 3 g quantities of sample were weighed out in scale bottles (three per sample). The weighed sample was dried for four hours at 105°C in a thermostatic dryer. The weight was measured following drying and the moisture was calculated from the following equation (average value for n=3).

$$\text{Moisture (\%)} = \text{moisture evaporation weight (g)} \div \text{quantity of CH-19 Sweet}$$
$$\text{employed (g)} \times 100$$

EMBODIMENTS

The present invention is described below based on embodiments. However, the scope of the technique of the present invention is not limited to these embodiments. Unless specifically stated otherwise, the percentages given in the present invention denote weight percentages.

(Embodiment 1)

Frozen CH-19 Sweet chili peppers were comminuted to a diameter of 0.7 to 5 mm while still frozen. A 100 or 200 kg quantity was charged to a box-type batch dryer to achieve a starting material layer of about 4 cm.
The temperature of hot air blown into the box-type dryer was set to about 70°C and the dried product was mixed at a frequency of once each 30 minutes or 60 minutes.
At the end of drying, a Ketto moisture meter (infrared moisture measurement device) was used to check for a standard of 5 percent or less.
Following drying, the chili peppers were comminuted, molded to desired form, and packaged.
The capsinoid content of the dried product was checked as the survival rate relative to the capsinoid content of a dried product obtained by freeze-drying the frozen starting material employed. Table 1 gives the capsinoid survival rate together with the moisture content measured for the dried product. Since there was variation in the content of capsinoids in the chili peppers depending on the starting material, the survival rate was recorded based on the following test.

| Test segment | Embodiment 1-1 | Embodiment 1-2 | Embodiment 1-3 | Embodiment 2-1 | Embodiment 2-2 | Embodiment 2-3 | Embodiment 3 |
|---|---|---|---|---|---|---|---|
| System | Batch-type | Batch-type | Batch-type | Batch-type | Batch-type | Batch-type | Continuous |
| Quantity of starting material charged kg/unit | 100 | 100 | 100 | 100 | 120 | 260 | about 1000 |
| Cutting | no | yes | yes | yes | yes | yes | yes |
| Stirring frequency during drying | once/30 minutes | once/hour | once/30 minutes | once/30 minutes | once/15 minutes | once/30 minutes | average once/37 minutes |
| Hot air temperature (inlet) | 70 | 70 | 70 | 70 | 70 | 75 | 70 |
| Average air speed (m/s) | 0.42 | 0.33 | 0.22 | 0.18 | 0.33 | 0.42 | 0.16 |
| Drying time (hours) | 6.5 | 3.5 | 3 | 2.4 | 2.3 | 3 | 3 |
| Thickness of starting material layer (cm) | 4 | 4 | 4 | 4 | 4 | 4 | 2.5 |
| Capsinoid survival rate (%) | 6.2 | 41 | 74 | 73 | 90 | 77 | 98 |
| Moisture content of dried product * (%) | 8.3 | 3.6 | 6.9 | 6.2 | 6.1 | 5.2 | 2.9 |
| *AOAC method | | | | | | | |

As a result, the drying time following cutting was shortened to less than 1/2 and the capsinoid survival rate increased by 10 percent or more (test segments 1-1, 3). Further, an increase in stirring frequency raised the capsinoid survival rate to 30 percent or more (test segments 1-2, 3). Increases in cutting and stirring frequency were found to reduce uneven heating based on the color of the capsinoid-containing chili peppers (data not given). The fact that uneven heating was prevented indicated that the temperature of the product remained low during drying. Accordingly, when the standard of a moisture content of 10 percent or less was applied, increases in starting material cutting and stirring frequency contributed to the decrease in uneven heating and maintenance of a low product temperature, and were thus found to contribute to an improved capsinoid survival rate.

(Embodiment 2)

Frozen CH19-Sweet chili peppers were comminuted to a diameter of 0.7 to 5 mm while in a partially thawed state. A 100 to 300 kg quantity was charged to a box-type batch dryer to achieve a starting material layer of about 4 cm.

Hot air was blown into the box-type dryer. Drying was started when a temperature gage positioned in the dryer indicated a temperature of about 70 to 75°C. The product being dried was mixed every 15 or 30 minutes.

The speed of the blown hot air was mechanically increased or the hot air speed was varied by valve adjustment.

Drying was ended at a moisture content of 5 percent or less as measured by a Ketto moisture meter (infrared moisture measuring device).

Following drying, the chili peppers were comminuted, molded to a desired form, and packaged.

The capsinoid content of the dried product was checked as the survival rate relative to the capsinoid content of a dried product obtained by freeze-drying the frozen starting material employed. Table 1 gives the capsinoid survival rate together with the moisture content measured for the dried product. As a result, an increase in the air speed enhanced the capsinoid survival rate (test segments 2-1, 2). Further, when the air speed was increased, the capsinoid survival rate reached about the same level as when the drying temperature was increased (test segments 2-1, 3).

(Embodiment 3)

Frozen CH19-Sweet chili peppers were comminuted to a diameter of 0.7 to 5 mm while in a partially thawed state. A 1,000 kg quantity was charged to a continuous dryer to achieve a starting material layer of about 2 cm.

Hot air was blown into the dryer. Drying was started when a temperature gage positioned in the dryer indicated a temperature of about 70 to 75°C. The dried product was mixed roughly every 30 minutes.

The speed of the blown hot air was mechanically increased or the hot air speed was varied by valve adjustment.

Drying was ended when a moisture content of 5 percent or less was measured by a Ketto moisture meter (infrared moisture measuring device).

Following drying, the chili peppers were comminuted, molded to a desired form, and packaged.

The capsinoid content of the dried product was checked as the survival rate relative to the capsinoid content of a dried product obtained by freeze-drying the frozen starting material employed. The dried product of capsinoid-containing chili peppers obtained by the present invention can be suitably employed in capsinoid extraction and is of great industrial utility.

DESCRIPTION OF THE NUMBERS

[0049]

Fig. 1:1. Dryer main body

2. Punched holes (hot air outlets)

Fig. 2:

1. Support roller
2. Drive roller
3. Dryer main body
4. Support roller
5. Starting material inlet
6. Hot air inlet
7. Product removal outlet
8. Air discharge outlet

9. Lifting plates

**Claims**

**1.** A method for drying a material to be dried in the form of capsinoid-containing chili peppers, **characterized by** comprising the following steps and in that the capsinoid survival rate following drying is 70 percent or greater:

1) introducing said material to be dried into a dryer so that said material to be dried uniformly contacts hot air; and
2) in the case of a box-type batch dryer, setting an air flow so that an average air speed of hot air immediately after passing through the material to be dried is 0.3 m/s or greater and so that the air speed is such that the material to be dried is not scattered; and conducting drying until a moisture content as measured by AOAC method reaches 10 percent or less, wherein stirring is carried out during drying, or,
2) in the case of a continuous dryer, setting an air flow so that an average air speed of hot air immediately after passing through the material to be dried is 0.2 m/s or greater and so that the air speed is such that the material to be dried is not scattered; and conducting drying until the moisture content as measured by AOAC method reaches 10 percent or less, wherein stirring is carried out during drying.

**2.** The method according to claim 1 wherein said drying method satisfies at least one of the following conditions:

1) a hot air temperature of 65 to 80 °C;
2) stirring conducted at least once per hour.

**3.** The method according to claim 1 or 2 wherein the material to be dried is sliced to a width of 0.5 to 10 mm.

**4.** The drying method according to any of claims 1 to 3 wherein the capsinoid-containing chili peppers are one or more selected from the group consisting of Manganji peppers, Shishito peppers, Fushimi Amanaga peppers, and CH-19 Sweet peppers.

**5.** A dried material obtainable by the method according to any one of claims 1 to 4.

**Patentansprüche**

**1.** Verfahren zum Trocknen eines zu trocknenden Materials in der Form von Capsinoid enthaltendem Chilipfeffer, **dadurch gekennzeichnet, dass** es die folgenden Stufen umfasst und die Rate des unversehrten Capsinoids nach dem Trocknen 70 % oder höher ist:

1) das Einführen des zu trocknenden Materials in einen Trockner, so dass das zu trocknende Material heiße Luft gleichförmig kontaktiert; und
2) im Fall eines Chargentrockners vom Schachteltyp das Festlegen eines Luftstroms, so dass eine mittlere Luftgeschwindigkeit der heißen Luft unmittelbar nach dem Passieren durch das zu trocknende Material 0,3 m/sec. oder höher ist, und so dass die Luftgeschwindigkeit derart ist, dass das zu trocknende Material nicht gestreut wird; und das Durchführen einer Trocknung, bis der Feuchtigkeitsgehalt, gemessen nach dem AOAC-Verfahren, 10 % oder weniger erreicht, wobei während des Trocknens gerührt wird, oder
2) im Fall eines kontinuierlichen Trockners das Festlegen des Luftstroms, so dass die mittlere Luftgeschwindigkeit der heißen Luft unmittelbar nach dem Passieren durch das zu trocknende Material 0,2 m/sec. oder höher ist, und so dass die Luftgeschwindigkeit derart ist, dass das zu trocknende Material nicht gestreut wird; und das Durchführen einer Trocknung, bis der Feuchtigkeitsgehalt, gemessen nach dem AOAC-Verfahren, 10 % oder weniger erreicht, wobei während des Trocknens gerührt wird.

**2.** Verfahren nach Anspruch 1, wobei das Trocknungsverfahren mindestens eine der folgenden Bedingungen erfüllt:

1) eine Temperatur der heißen Luft von 65 bis 80°C;
2) das mindestens einmalige Rühren pro Stunde.

**3.** Verfahren nach Anspruch 1 oder 2, wobei das zu trocknende Material zu Scheiben mit einer Dicke von 0,5 bis 10 mm geschnitten wird.

**4.** Verfahren nach einem der Ansprüche 1 bis 3, wobei der Capsinoid enthaltende Chilipfeffer ein oder mehrere Pfefferarten ist, die aus der Gruppe ausgewählt sind, die aus Manganji-Pfeffer, Shishito-Pfeffer, Fushimi Amanaga-Pfeffer und CH-19 Süßpfeffer besteht.

**5.** Nach dem Verfahren gemäß einem der Ansprüche 1 bis 4 erhältliches trockenes Material.

**Revendications**

**1.** Procédé de séchage d'une matière devant être séchée sous la forme de piments contenant un capsinoïde, **caractérisé en ce qu'**il comprend les étapes suivantes et **en ce que** le taux de survie du capsinoïde suite au séchage est de 70 % ou plus :

1) introduction de ladite matière devant être séchée dans un séchoir afin que ladite matière devant être séchée soit uniformément en contact avec de l'air chaud ;
2) dans le cas d'un séchoir discontinu de type boîte, la définition d'un flux d'air afin qu'une vitesse d'air moyenne de l'air chaud immédiatement après passage à travers la matière devant être séchée soit de 0,3 m/s ou plus et afin que la vitesse de l'air soit telle que la matière devant être séchée ne soit pas dispersée ; et l'exécution du séchage jusqu'à ce que la teneur en humidité telle que mesurée par un procédé AOAC atteigne 10 % ou moins, une agitation étant opérée pendant le séchage, ou,
2) dans le cas d'un séchoir continu, la définition d'un flux d'air afin qu'une vitesse d'air moyenne de l'air chaud immédiatement après passage à travers la matière devant être séchée soit de 0,2 m/s ou plus et afin que la vitesse de l'air soit telle que la matière devant être séchée ne soit pas dispersée ; et l'exécution du séchage jusqu'à ce que la teneur en humidité telle que mesurée par le procédé AOAC atteigne 10 % ou moins, une agitation étant opérée pendant le séchage.

**2.** Procédé selon la revendication 1, ledit procédé de séchage satisfaisant au moins l'une des conditions suivantes :

1) une température de l'air chaud de 65 à 80°C ;
2) une agitation opérée au moins une fois par heure.

**3.** Procédé selon la revendication 1 ou 2, dans lequel la matière devant être séchée est découpée en tranches d'une largeur de 0,5 à 10 mm.

**4.** Procédé de séchage selon l'une quelconque des revendications 1 à 3, dans lequel les piments rouges contenant un capsinoïde sont un ou plusieurs piments choisis dans le groupe constitué par les piments Manganji, les piments Shishito, les piments Fushimi Amanaga et les piments CH-19 Sweet.

**5.** Matière séchée pouvant être obtenue grâce au procédé selon l'une quelconque des revendications 1 à 4.

Figure 1

Starting
material

Air discharge

5

2    3    4

1

8

Hot air

6

Sectional view of
main body

9

7

Product

Figure 2

EP 1 772 065 B1

14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEISEI11246478 B
- JP 2001069938 A
- JP 2000041613 A
- JP HEISEI78702 B
- JP HEISEI751502 B

**Non-patent literature cited in the description**

- *Journal of the Japanese Society for Horticultural Science,* vol. 58, 601-607
- **OSAMU SAKASHITA.** *Methods of Scaling-Up Powder Plants,* 153
- **TSUNEMI MORI.** Handbook of Powder Technology. 206
- Powder Engineering Handbook. Japan Society of Powder Technology, 358
- **IBRAHIM DOYMAZ et al.** *Journal of Food Engineering,* 2002, 331-335
- *J. Agric. Food Chem.,* 2001, vol. 49, 4026-4030